(19) Europäisches Patentamt
European Patent Office
Office européen des brevets

(11) EP 3 592 788 B1

(12) **EUROPEAN PATENT SPECIFICATION**

(45) Date of publication and mention of the grant of the patent:
**07.07.2021 Bulletin 2021/27**

(21) Application number: **18711854.2**

(22) Date of filing: **06.03.2018**

(51) Int Cl.:
***C08F 293/00*** *(2006.01)* ***C08F 2/38*** *(2006.01)*
***C08L 53/00*** *(2006.01)*

(86) International application number:
**PCT/EP2018/055453**

(87) International publication number:
**WO 2018/162467 (13.09.2018 Gazette 2018/37)**

(54) **FLUORINATED THERMOPLASTIC ELASTOMERS**

FLUORIERTE THERMOPLASTISCHE ELASTOMERE

ÉLASTOMÈRES THERMOPLASTIQUES FLUORÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.03.2017 EP 17159768**

(43) Date of publication of application:
**15.01.2020 Bulletin 2020/03**

(73) Proprietor: **Solvay Specialty Polymers Italy S.p.A.**
**20021 Bollate (MI) (IT)**

(72) Inventors:
- **CARELLA, Serena**
  **20015 Parabiago (MI) (IT)**
- **BRINATI, Giulio**
  **20139 Milano (IT)**
- **DOSSI, Marco**
  **20162 Milano (IT)**

(74) Representative: **Benvenuti, Federica**
**Solvay S.A.**
**Intellectual Assets Management**
**Rue de Ransbeek, 310**
**1120 Bruxelles (BE)**

(56) References cited:
**EP-A1- 1 209 176** **EP-A2- 0 422 644**
**JP-A- 2009 256 658** **US-A1- 2016 194 512**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

Technical Field

Fluorinated thermoplastic elastomers, i.e. materials combining rubber properties and thermoplastic behaviour, have been provided in the art and are known for being block copolymers consisting of at least one "soft" segment having elastomeric properties and at least one "hard" segment having thermoplastic properties.

It generally understood that while the elastomeric block component is responsible for delivering the rubber-related properties, the thermoplastic segments provides for a sort of reversible crosslinking through the creation of crystalline spherulites, creating interconnections among block-copolymer chains.

As a consequence, these fluorinated thermoplastic elastomers are able to deliver their outstanding performances with no need of further curing, with significant advantages in terms of processing, including re-processing of scraps and losses.

In this area, US 5605971 (AUSIMONT SPA) 25.02.1997 , US 5612419 (AUSIMONT SPA) 18.03.1997 , US 6207758 (AUSIMONT SPA) 27.03.2001 disclose fluorinated thermoplastic elastomers including plastomeric segment and elastomeric segment, whereas elastomeric segments may be of different types, including e.g. segments including vinylidene fluoride (VDF) recurring units and/or segments including tetrafluoroethylene (TFE) recurring units and whereas plastomeric segment may equally be of different types, such as segments comprising TFE units, segments comprising VDF units, segments comprising ethylene, propylene or isobutylene units, in combination with other units. In particular, in these documents, the segments of plastomeric type may be notably copolymers of TFE or CTFE (40-60 percent) with ethylene, propylene or isobutylene (40-60 percent), optionally containing as third comonomer a $C_3$-$C_8$ (per)fluoroolefin or a PAVE, in amounts from 0.1 to 10 percent, without nevertheless these embodiments being more specifically described in connection with actual examples of materials possessing specific properties.

Now, the presence of a block of ECTFE may be seen as an advantageous tool for delivering to the corresponding fluorinated thermoplastic elastomer the advantageous features known for ECTFE, including notably increased impermeability, increased solvent and chemical resistance, etc.

With these regards, ethylene (E)-chlorotrifluoroethylene (CTFE) copolymers, generally manufactured by solvent-assisted polymerization at low temperature, are known for delivering highly crystalline structures when the polymerized chain thereof respects the targeted strictly alternate sequence of E and CTFE units, leading to a maximum in melting point corresponding to a statistical 50/50 mol/mol ECTFE.

However, the presence of highly crystalline structures forming large spherulites in fluorinated thermoplastic elastomers is considered as quite desavantageous, as these structures rather are considered as reducing the overall physical cross-linking density of the elastomeric chains, which detrimentally affect sealing properties, especially at high temperatures.

There is thus still a shortfall in the art for fluorinated thermoplastic elastomers able to deliver improved sealing properties, in particular improved C-Set values at temperatures as high as 70°C, combined with improved chemical and barrier properties.

Summary of invention

The Applicant has now surprisingly found that certain fluorinated thermoplastic elastomers, as below detailed, are such to address and cope with the challenging requirements expressed above. Relying on an emulsion polymerization method, the Applicant has been able to provide certain fluorinated thermoplastic elastomers including 'ECTFE'-like plastomeric blocks characterized by lower crystallinity and assembling in the solid state under the form of homogeneously dispersed fine spherulites, contributing substantially to the improvement of sealing performances, in particular at high temperature.

The present invention hence is directed to a fluorinated thermoplastic elastomer [polymer (F-TPE)] comprising:

- at least one elastomeric block (A) consisting of a sequence of recurring units, said sequence comprising recurring units derived from at least one fluorinated monomer, said block (A) possessing a glass transition temperature of less than 25°C, as determined according to ASTM D3418, and
- at least one thermoplastic block (B) consisting of a sequence of recurring units, said sequence comprising recurring units derived from ethylene and recurring units derived from chlorotrifluoroethylene,

wherein said polymer (F-TPE) possesses a melting point ($T_m$) of at least 180°C and a heat of crystallization ($\Delta H_{XX}$) respecting the following inequality:

$$1.5\ J/g \leq \Delta H_{XX} \leq F_{(B)} \cdot 35\ J/g$$

wherein $T_m$ and $\Delta H_{XX}$ are determined according to ASTM D3418, and wherein in above-mentioned inequality $F_{(B)}$ is the weight ratio $Wt_{(B)}/[Wt_{(A)} + Wt_{(B)}]$, whereas $Wt_{(A)}$ is the weight of block(s) (A) and $Wt_{(B)}$ is the weight of block(s) (B).

Description of embodiments

The fluorinated thermoplastic elastomer [polymer (F-TPE)]

For the purpose of the present invention, the term "elastomeric", when used in connection with the "block (A)" is hereby intended to denote a polymer chain segment which, when taken alone, is substantially amorphous, that is to say, has a heat of crystallization of less than 2.0 J/g, preferably of less than 1.5 J/g, more preferably of less than 1.0 J/g, as measured according to ASTM D3418.

For the purpose of the present invention, the term "thermoplastic", when used in connection with the "block (B)", is hereby intended to denote a polymer chain segment which, when taken alone, is semi-crystalline, and possesses a detectable melting point, with an associated heat of crystallization of exceeding 10.0 J/g, as measured according to ASTM D3418.

The fluorinated thermoplastic elastomer of the composition (C) of the invention is advantageously a block copolymer, said block copolymer typically having a structure comprising at least one block (A) alternated to at least one block (B), that is to say that said fluorinated thermoplastic elastomer typically comprises, preferably consists of, one or more repeating structures of type (B)-(A)-(B). Generally, the polymer (F-TPE) has a structure of type (B)-(A)-(B), i.e. comprising a central block (A) having two ends, connected at both ends to a side block (B).

The block (A) is often alternatively referred to as soft block (A); the block (B) is often alternatively referred to as hard block (B).

The term "fluorinated monomer" is hereby intended to denote an ethylenically unsaturated monomer comprising at least one fluorine atom.

The fluorinated monomer may further comprise one or more other halogen atoms (Cl, Br, I), and is advantageously selected from the group consisting of:

(a) $C_2$-$C_8$ perfluoroolefins such as tetrafluoroethylene (TFE), hexafluoropropylene (HFP), perfluoroisobutylene;
(b) hydrogen-containing $C_2$-$C_8$ fluoroolefins, such as vinylidene fluoride (VDF), vinyl fluoride, trifluoroethylene (TrFE), hexafluoroisobutylene (HFIB), perfluoroalkyl ethylenes of formula $CH_2$=CH-$R_{f1}$, wherein $R_{f1}$ is a $C_1$-$C_6$ perfluoroalkyl group;
(c) $C_2$-$C_8$ chloro- and/or bromo-containing fluoroolefins such as chlorotrifluoroethylene (CTFE);
(d) fluoroalkylvinylethers of formula $CF_2$=CFOR$_{fa}$, wherein $R_{fa}$ is a $C_1$-$C_6$ fluoroalkyl group, such as $CF_3$, $C_2F_5$ or $C_3F_7$;
(e) fluorooxyalkylvinylethers of formula $CF_2$=CFOX$_{0a}$, wherein $X_{0a}$ is a a C $_1$-$C_{12}$ fluorooxyalkyl group comprising one or more than one ethereal oxygen atom, including notably fluoromethoxyalkylvinylethers of formula $CF_2$=CFOCF$_2$OR$_{fb}$, with $R_{fb}$ being a $C_1$-$C_3$ fluoro(oxy)alkyl group, such as -$CF_2CF_3$, -$CF_2CF_2$-O-$CF_3$ and -$CF_3$; and
(f) (per)fluorodioxoles of formula:

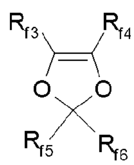

wherein each of $R_{f3}$, $R_{f4}$, $R_{f5}$ and $R_{f6}$, equal to or different from each other, is independently a fluorine atom, a $C_1$-$C_6$ perfluoro(oxy)alkyl group, optionally comprising one or more oxygen atoms, such as -$CF_3$, -$C_2F_5$, -C $_3F_7$, -$OCF_3$ or -$OCF_2CF_2OCF_3$.

Block(s) (A) may further comprise recurring units derived from at least one hydrogenated monomer, wherein the term "hydrogenated monomer" is intended to denote an ethylenically unsaturated monomer comprising at least one hydrogen atom and free from fluorine atoms. Hydrogenated monomers, as above detailed, include notably ethylene, propylene, (meth)acrylic monomers, styrenic monomers.

The polymer (F-TPE) typically comprises, preferably consists of:

- at least one elastomeric block (A) selected from the group consisting of:

(1) vinylidene fluoride (VDF)-based elastomeric blocks ($A_{VDF}$) consisting of a sequence of recurring units, said sequence comprising recurring units derived from VDF and recurring units derived from at least one fluorinated monomer different from VDF, said fluorinated monomer different from VDF being typically selected from the group consisting of:

(a) $C_2$-$C_8$ perfluoroolefins such as tetrafluoroethylene (TFE), hexafluoropropylene (HFP);
(b) hydrogen-containing $C_2$-$C_8$ fluoroolefins different from VDF, such as vinyl fluoride, trifluoroethylene (TrFE), hexafluoroisobutylene (HFIB), perfluoroalkyl ethylenes of formula $CH_2$=CH-$R_{f1}$, wherein $R_{f1}$ is a $C_1$-$C_6$ perfluoroalkyl group;
(c) $C_2$-$C_8$ chloro- and/or bromo-containing fluoroolefins such as chlorotrifluoroethylene (CTFE);
(d) perfluoroalkylvinylethers (PAVE) of formula $CF_2$=$CFOR_{f1}$, wherein $R_{f1}$ is a $C_1$-$C_6$ perfluoroalkyl group, such as $CF_3$ (PMVE), $C_2F_5$ or $C_3F_7$;
(e) perfluorooxyalkylvinylethers of formula $CF_2$=$CFOX_0$, wherein $X_0$ is a a $C_1$-$C_{12}$ perfluorooxyalkyl group comprising one or more than one ethereal oxygen atom, including notably perfluoromethoxyalkylvinylethers of formula $CF_2$=$CFOCF_2OR_{f2}$, with $R_{f2}$ being a $C_1$-$C_3$ perfluoro(oxy)alkyl group, such as -$CF_2CF_3$, -$CF_2CF_2$-O-$CF_3$ and -$CF_3$; and

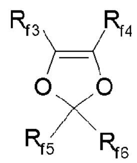

wherein each of $R_{f3}$, $R_{f4}$, $R_{f5}$ and $R_{f6}$, equal to or different from each other, is independently a fluorine atom, a $C_1$-$C_6$ perfluoro(oxy)alkyl group, optionally comprising one or more oxygen atoms, such as -$CF_3$, -$C_2F_5$, -C $_3F_7$, -$OCF_3$ or -$OCF_2CF_2OCF_3$; and

(2) tetrafluoroethylene (TFE)-based elastomeric blocks ($A_{TFE}$) consisting of a sequence of recurring units, said sequence comprising recurring units derived from TFE and recurring units derived from at least one fluorinated monomer different from TFE, said fluorinated monomer being typically selected from the group consisting of those of classes (b), (c), (d), (e) as defined above;

- at least one thermoplastic block (B) consisting of a sequence of recurring units derived from at least one fluorinated monomer.

Any of block(s) ($A_{VDF}$) and ($A_{TFE}$) may further comprise recurring units derived from at least one hydrogenated monomer, which may be selected from the group consisting of $C_2$-$C_8$ non-fluorinated olefins such as ethylene, propylene or isobutylene.

Should the elastomeric block (A) be a block ($A_{VDF}$), as above detailed, said block ($A_{VDF}$) typically consists of a sequence of recurring units comprising, preferably consisting of:

- from 45% to 90% by moles of recurring units derived from vinylidene fluoride (VDF),
- from 5% to 50% by moles of recurring units derived from at least one fluorinated monomer different from VDF, and
- optionally, up to 30% by moles of recurring units derived from at least one hydrogenated monomer,

with respect to the total moles of recurring units of the sequence of block ($A_{VDF}$).

The elastomeric block (A) may further comprise recurring units derived from at least one bis-olefin [bis-olefin (OF)] of formula:

$$R_AR_B=CR_C\text{-}T\text{-}CR_D=R_ER_F$$

wherein $R_A$, $R_B$, $R_C$, $R_D$, $R_E$ and $R_F$, equal to or different from each other, are selected from the group consisting of H, F, Cl, $C_1$-$C_5$ alkyl groups and $C_1$-$C_5$ (per)fluoroalkyl groups, and T is a linear or branched $C_1$-$C_{18}$ alkylene or cycloalkylene group, optionally comprising one or more than one ethereal oxygen atom, preferably at least partially fluorinated, or a (per)fluoropolyoxyalkylene group.

The bis-olefin (OF) is preferably selected from the group consisting of those of any of formulae (OF-1), (OF-2) and (OF-3):

(OF-1)

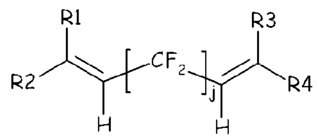

wherein j is an integer comprised between 2 and 10, preferably between 4 and 8, and R1, R2, R3 and R4, equal to or different from each other, are selected from the group consisting of H, F, $C_1$-$C_5$ alkyl groups and $C_1$-$C_5$ (per)fluoroalkyl groups;

(OF-2)

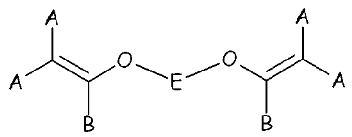

wherein each of A, equal to or different from each other and at each occurrence, is independently selected from the group consisting of H, F and Cl; each of B, equal to or different from each other and at each occurrence, is independently selected from the group consisting of H, F, Cl and $OR_B$, wherein $R_B$ is a branched or straight chain alkyl group which may be partially, substantially or completely fluorinated or chlorinated, E is a divalent group having 2 to 10 carbon atoms, optionally fluorinated, which may be inserted with ether linkages; preferably E is a $-(CF_2)_m-$ group, wherein m is an integer comprised between 3 and 5; a preferred bis-olefin of (OF-2) type is $F_2C=CF-O-(CF_2)_5-O-CF=CF_2$;

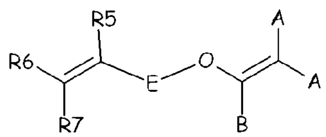

wherein E, A and B have the same meaning as defined above, R5, R6 and R7, equal to or different from each other, are selected from the group consisting of H, F, $C_1$-$C_5$ alkyl groups and $C_1$-$C_5$ (per)fluoroalkyl groups.

Should the block (A) consist of a recurring units sequence further comprising recurring units derived from at least one bis-olefin (OF), said sequence typically comprises recurring units derived from the said at least one bis-olefin (OF) in an amount comprised between 0.01% and 1.0% by moles, preferably between 0.03% and 0.5% by moles, more preferably between 0.05% and 0.2% by moles, based on the total moles of recurring units of block (A).

The expression "minor amount" when used hereunder for indicating the amount of recurring units derived from a bis-olefin in a block (A) of polymer (F-TPE) is intended to denote an amount which is one order of magnitude less (e.g. at least 50 times less) than the amount of recurring units derived from the other monomers, i.e. TFE and the perfluorinated monomer other than TFE, so as not to significantly affect the typical thermal stability and chemical resistance performances due to these latter units.

Should the elastomeric block (A) of polymer (F-TPE) further comprise recurring units derived from at least one bis-olefin (OF), said block (A) typically further comprises recurring units derived from at least one bis-olefin (OF) in an amount comprised between 0.01% and 1.0% by moles, preferably between 0.03% and 0.5% by moles, more preferably between 0.05% and 0.2% by moles, based on the total moles of recurring units constituting said elastomeric block (A).

As said, block (B) of polymer (F-TPE) consists of a sequence of recurring units, said sequence comprising recurring units derived from ethylene and recurring units derived from chlorotrifluoroethylene.

Said sequence of recurring units of block (B) generally consists essentially of:

(j) from 40 to 60% by moles of recurring units derived from ethylene (E);
(jj) from 60 to 40% by moles of recurring units derived from chlorotrifluoroethylene (CTFE); and
(jjj) from 0 to 10% by moles, preferably from 0 to 5%, more preferably from 0 to 2.5 % by moles, of recurring units derived from of at least one fluorinated monomer(s) and/or hydrogenated monomer(s) different from E, and CTFE,

the % by moles being referred to the overall moles of recurring units of block (B).

The said expressions "fluorinated monomer" and "hydrogenated monomer" possess the meaning as above detailed in connection with block (A), and are meant to designate ethylenically unsaturated monomers comprising at least one fluorine atom, or being free from fluorine atoms, respectively.

The comonomer (jjj) can be a hydrogenated monomer selected from the group consisting of:

1) acrylic monomers having general formula: $CH_2$=CH-CO-O-$R_2$ wherein $R_2$ is a $C_1$-$C_{20}$ hydrocarbon group, optionally containing one or more heteroatoms;
2) vinylether monomers having general formula: $CH_2$=CH-O-$R_2$ wherein $R_2$ is a $C_1$-$C_{20}$ hydrocarbon group, optionally containing one or more heteroatoms;
3) vinyl esters of the carboxylic acid having general formula: $CH_2$ =CH-O-CO-$R_2$ wherein $R_2$ is a $C_1$-$C_{20}$ hydrocarbon group, optionally containing one or more heteroatoms;
4) unsaturated carboxylic acids having general formula $CH_2$=CH-$(CH_2)_n$ -COOH wherein n is 0 or an integer of 1 to 10.

The comonomer (jjj) can be a fluorinated monomer; in such case, comonomer (jjj) can be any of fluorinated monomers listed above in connection with block (A), and more particularly can be a (per)fluoroalkylvinylethers complying with formula $CF_2$=CFO$R_{fc}$ in which $R_{fc}$ is a $C_1$-$C_6$ fluoro- or perfluoroalkyl, e.g. $CF_3$, $C_2F_5$, $C_3F_7$.

Block(s) (B) which have been found to give particularly good results in the polymer (F-TPE) of the invention are those consisting of sequence of recurring units derived from:

(j) from 45 to 55 % by moles of ethylene (E);
(jj) from 55 to 45 % by moles of chlorotrifluoroethylene (CTFE), and optionally
(jjj) from 0 to 2.5 % by moles of at least one (per)fluoroalkylvinylethers complying with formula $CF_2$=CFO$R_{fc}$ in which $R_{fc}$ is a $C_1$-$C_6$ fluoro- or perfluoroalkyl, e.g. $CF_3$, $C_2F_5$, $C_3F_7$,

the % by moles being referred to the overall moles of recurring units of block (B).

End chains, defects or minor amounts of monomer impurities (< 1% moles) leading to recurring units different from those above mentioned can be still comprised in the preferred block(s) (B), without this affecting properties of the polymer (F-TPE).

As said, the polymer (F-TPE) possesses a melting point ($T_m$) of at least 180°C, preferably of at least 200°C, more preferably of at least 220°C, wherein $T_m$ is determined according to ASTM D3418. Yet, it is preferably for the polymer (F-TPE) to possess a melting point ($T_m$) of at most 242°C, preferably at most 240°C, more preferably at most 235°C, even more preferably of at most 230°C.

Further, the polymer (F-TPE) of the present invention possesses a heat of crystallization ($\Delta H_{XX}$) respecting the following inequality:
$1.5\ J/g \leq \Delta H_{XX} \leq F_{(B)} \cdot 35\ J/g$,
preferably respecting the following inequality:
$2.0\ J/g \leq \Delta H_{XX} \leq F_{(B)} \cdot 30\ J/g$,
wherein $\Delta H_{XX}$ is determined according to ASTM D3418, and wherein in above-mentioned inequalities $F_{(B)}$ is the weight ratio $Wt_{(B)}/[Wt_{(A)}+Wt_{(B)}]$, whereas $Wt_{(A)}$ is the weight of block(s) (A) and $Wt_{(B)}$ is the weight of block(s) (B).

Without being bound by this theory, the Applicant believes that the high melting temperature typical of ECTFE-type materials is crucial for delivering maintenance of mechanical and sealing properties at high temperature, while the relatively low crystallinity, representative of small spherulites, as achievable notably through emulsion polymerization, ensures creation of micro-crystalline domains, well dispersed in the elastomeric matrix, and hence maximizing physical crosslinking effect, and hence sealing performances.

The weight ratio between blocks (A) and blocks (B) in the fluorinated thermoplastic elastomer is typically comprised between 95:5 and 10:90, i.e. $F_{(B)}$ values ranging from 0.05 to 0.90.

According to certain preferred embodiments, the polymers (F-TPE) comprise a major amount of blocks (A); according to these embodiment's, the polymer (F-TPE) used in the method of the present invention is characterized by a weight ratio between blocks (A) and blocks (B) of 95:5 to 65:35, preferably 90:10 to 70:30, i.e. $F_{(B)}$ values ranging from 0.05 to 0.35, preferably from 0.10 to 0.30.

The polymers (F-TPE) used in the method of the present invention may be manufactured by a manufacturing process comprising the following sequential steps:

(a) emulsion-polymerizing at least one fluorinated monomer, and possibly at least one bis-olefin (OF), in an aqueous medium in the presence of a radical initiator and of an iodinated chain transfer agent, thereby providing a pre-polymer consisting of at least one block (A) containing one or more iodinated end groups dispersed in an aqueous medium; and
(b) emulsion-polymerizing ethylene (E) and chlorotrifluoroethylene (CTFE), and optionally one or more than one

fluorinated monomer and/or hydrogenated monomer different from E and CTFE, in the presence of a radical initiator and in the presence of the pre-polymer dispersed in the said aqueous medium as obtained from step (a), thereby providing at least one block (B) grafted on said pre-polymer through reaction of the said iodinated end groups of the block (A).

The radical initiator is typically selected from the group consisting of:

- inorganic peroxides such as, for instance, alkali metal or ammonium persulphates, perphosphates, perborates or percarbonates, optionally in combination with ferrous, cuprous or silver salts or other easily oxidable metals;
- organic peroxides such as, for instance, disuccinylperoxide, tertbutyl-hydroperoxide, and ditertbutylperoxide; and
- azo compounds (see, for instance, US 2515628 (E. I. DU PONT DE NEMOURS AND CO.) 7/18/1950 and US 2520338 (E. I. DU PONT DE NEMOURS AND CO.) 8/29/1950).

It is also possible to use organic or inorganic redox systems, such as persulphate ammonium/sodium sulphite, hydrogen peroxide/aminoiminomethansulphinic acid.

In step (a) and/or (b) of the manufacturing method as above detailed, one or more iodinated chain transfer agents are added to the reaction medium, typically of formula $R_xI_n$, wherein $R_x$ is a $C_1$-$C_{16}$, preferably a $C_1$-$C_8$ (per)fluoroalkyl or a (per)fluorochloroalkyl group, and n is 1 or 2. It is also possible to use as chain transfer agents alkali or alkaline-earth metal iodides, as described notably in US 5173533 (AUSIMONT SPA) 22.12.1992 . The amount of the chain transfer agent to be added is established depending on the molecular weight which is intended to be obtained and on the effectiveness of the chain transfer agent itself.

In any of steps (a) and (b) of the manufacturing method as above detailed, one or more surfactants may be used, preferably fluorinated surfactants of formula:

$$R_y\text{-}X^-M^+$$

wherein $R_y$ is a $C_5$-$C_{16}$ (per)fluoroalkyl or a (per)fluoropolyoxyalkyl group, $X^-$ is $-COO^-$ or $-SO_3^-$, and $M^+$ is selected from the group consisting of $H^+$, $NH_4^+$, and an alkali metal ion.

Among the most commonly used surfactants, mention can be made of (per)fluoropolyoxyalkylenes terminated with one or more carboxyl groups can be used.

In the manufacturing process, when step (a) is terminated, the reaction is generally discontinued, for instance by cooling, and the residual monomers are removed, for instance by heating the emulsion under stirring. The second polymerization step (b) is then advantageously carried out, feeding the ethylene/chlorotrifluoroethylene-containing monomer(s) mixture and adding fresh radical initiator. If necessary, under step (b) of the process for the manufacture of the polymer (F-TPE), one or more further chain transfer agents may be added, which can be selected from the same iodinated chain transfer agents as defined above or from chain transfer agents known in the art for use in the manufacture of fluoropolymers such as, for instance, ketones, esters or aliphatic alcohols having from 3 to 10 carbon atoms, such as acetone, ethylacetate, diethylmalonate, diethylether and isopropyl alcohol; hydrocarbons, such as methane, ethane and butane; chloro(fluoro)carbons, optionally containing hydrogen atoms, such as chloroform and trichlorofluoromethane; bis(alkyl)carbonates wherein the alkyl group has from 1 to 5 carbon atoms, such as bis(ethyl) carbonate and bis(isobutyl) carbonate. When step (b) is completed, the polymer (F-TPE) is generally isolated from the emulsion according to conventional methods, such as by coagulation by addition of electrolytes or by cooling.

The polymerization temperature and pressure can vary within wide ranges depending on the type of monomers used and based on the other reaction conditions. Step (a) and/or step (b) of process for the manufacture of the polymer (F-TPE) is typically carried out at a temperature of from -20°C to 150°C; and/or typically under pressures up to 10 MPa.

The polymer (F-TPE) of the present invention can be compounded with various additives, adjuvants and modifying agents, as required depending upon field of use.

Still another object of the present invention is hence a composition (C) comprising the polymer (F-TPE) of the present invention in combination with at least one additional component, which is advantageously selected from the group consisting of reinforcing agents, pigments, processing aids, plasticizers, stabilizers (including thermal stabilizers, UV stabilizers), acid scavengers, mould release agents, and curing systems.

While the use of a curing system is not mandatory, according to certain embodiments, it may be appropriate including an agent able to promote cross-linking of the polymer (F-TPE), so as to further improve performances of the cured part obtained therefrom. In such case, usual curing systems which have been found appropriate for promoting cross-linking of elastomeric block (A) or of thermoplastic block (B) may be added.

The polymer (F-TPE) or a composition (C) comprising the same can be processed through usual thermoplastic techniques so as to provide shaped articles.

A further object of the present invention is hence a method for manufacturing a shaped article, said method comprising moulding polymer (F-TPE) or composition (C) as above detailed so as to provide said shaped article.

Technique used for moulding is not particularly limited; standard techniques including shaping polymer (F-TPE) or composition (C) in a molten/softened form can be advantageously applied, and include notably compression moulding, extrusion moulding, injection moulding, transfer moulding and the like.

It is nevertheless generally understood that especially when said shape article possesses a complex design, injection moulding technique is the most versatile, and extensively used.

According to this technique, a ram or screw-type plunger is used for forcing a portion of polymer (F-TPE) or composition (C) in its molten state into a mould cavity, wherein the same solidified into a shape that has confirmed to the contour of the mould. Then, the mould opens and suitable means (e.g. an array of pins, sleeves, strippers, etc.) are driven forward to demould the article. Then, the mould closes and the process is repeated.

In another embodiment of the present invention, the method for manufacturing a shaped article includes a step of machining a standard shaped part so as to obtain the targeted shaped article having different size and shape from said standard shaped part. Non limiting examples of said standard shaped parts include notably a plate, a rod, a slab and the like. Said standard shaped parts can be obtained by any processing technique, including notably extrusion or injection moulding of the polymer (F-TPE) or composition (C).

The shaped articles made from polymer (F-TPE) or composition (C) can be notably useful as sealing materials.

Non-limiting examples of shaped articles of the invention useful as sealing material are notably an O- or square-ring, packing, gasket, diaphragm and other sealing materials in the semiconductor-related fields such as semiconductor manufacturing equipment, liquid crystal panel manufacturing equipment, plasma panel manufacturing equipment, plasma address liquid crystal panel, field emission display panel, and solar cell substrate, and these can be used on CVD equipment, dry etching equipment, wet etching equipment, oxidation and diffusion equipment, sputtering equipment, ashing equipment, cleaning equipment, ion implantation equipment and exhaust equipment. Concretely these can be used as O-ring and sealing material for a gate valve, as O-ring and other sealing materials for a quartz window, as O-ring and other sealing materials for a chamber, as O-ring and other sealing materials for a gate, as O-ring and other sealing materials for a bell jar, as O-ring and other sealing materials for a coupling, as O-ring, diaphragm and other sealing materials for a pump, as O-ring and other sealing materials for a gas control equipment for semiconductor, and as O-ring and other sealing materials for a resist developing solution and releasing solution.

In the field of automobile, the shaped articles of the invention can be used as a gasket, shaft seal, valve stem seal, piston ring, crank shaft seal, cam shaft seal, oil seal and various sealing materials for engine and its peripheral equipment and various sealing materials for driving equipment. Examples of sealing materials to be used on a fuel system and its peripheral equipment are O- or square-ring, packing and diaphragm. Concretely there can be used as engine head gasket, metal gasket, oil pan gasket, crank shaft seal, cam shaft seal, valve stem seal, manifold packing, seal for oxygen sensor, injector O-ring, injector packing, fuel pump O-ring, diaphragm, crank shaft seal, gear box seal, power piston packing, cylinder liner seal, valve stem seal, front pump seal of automatic transmission gear, rear axle pinion seal, universal joint gasket, speed meter pinion seal, foot brake piston cup, O-ring of torque transmission, oil seal, seal of exhaust gas recirculation combustion equipment, bearing seal, and diaphragm for carburettor sensor.

In the fields of aviation, shaped articles of the invention can be diaphragm, O- or square-ring, valve, packing and various sealing materials, and these can be used on a fuel system. Concretely in the field of aviation, there are jet engine valve stem seal, gasket, O-ring, rotating shaft seal, gasket for hydraulic equipment and fire wall seal, and in the field of ship, propeller shaft stern seal of screw, valve stem seal for suction and exhaust of diesel engine, butterfly valve seal and butterfly valve shaft seal.

In the field of chemical processing, shaped articles of the invention can be valve, packing diaphragm, O- or square-ring, and various sealing materials, and these can be used for processes for preparing chemicals such as pharmaceuticals, agricultural chemicals, coatings and resins. Concretely there can be used for pump for chemicals, seal of flow meter and piping, seal for heat exchanger, packing for glass cooler of sulfuric acid manufacturing equipment, seal of agricultural chemicals sprinkler and transfer pump, seal of gas piping, seal for plating solution, packing for high temperature dryer, belt roll seal for paper making, seal of fuel cell, duct joint seal, gas chromatography, packing for tube joint of pH meter, seal of analyser and physical and chemical apparatuses, diaphragm, valve parts and the like.

For developing machines in the field of photograph, for printing machines in the field of printing and for coating facilities in the field of coating, the shaped articles of the invention can be used as seal and valve parts of dry copying machine.

In the field of food processing equipment's, shaped articles of the invention can be a valve, packing, diaphragm, O- or square-ring, and various sealing materials which can be used in food producing process. Concretely the shaped articles of the invention can be used as seal of plate type heat exchanger and solenoid valve seal of vending machine.

In the field of equipment for nuclear power plant, shaped articles of the invention can be a packing, O-ring, diaphragm, valve and various sealing materials.

In the field of general purpose industry equipment's, shaped articles of the invention can be a packing, O-ring,

diaphragm, valve and various sealing materials. More specifically, shaped articles of the invention can be used for seal of hydraulic and lubricating machine, bearing seal, window and other seals of dry cleaner, seal of uranium hexafluoride concentrator, seal (vacuum) valve of cyclotron, seal of automatic packaging machine, and diaphragm of pump for analysing sulfur dioxide and chlorine gas in the air (pollution control equipment).

In the field of use of electric devices, shaped articles of the invention can be used as a venting seal for an insulating oil cap and liquid seal transformer, e.g. for high speed trains.

In the domain of fuel cells, shaped articles of the invention can be used as a sealing material between the electrode and the separator, seals for hydrogen, oxygen and produced water piping and packing's to be used between the fuel cell electrodes and for peripheral pipes thereof.

In the field of electronic parts, shaped articles of the invention can be used as a heat-releasing material, electromagnetic wave shielding material and gasket for hard disc drive of computer.

Also, the shaped articles of the invention can be can be used especially suitably as sealing materials for clean facilities such as gasket for magnetic recorder (hard disc drive) and seal ring materials for semiconductor manufacturing equipment and device storage for wafer.

Should the disclosure of any patents, patent applications, and publications which are incorporated herein by reference conflict with the description of the present application to the extent that it may render a term unclear, the present description shall take precedence.

The invention will be now described in more detail with reference to the following examples whose purpose is merely illustrative and not limitative of the scope of the invention.

Example 1: block copolymer having structure ECTFE-P(VDF-HFP)-ECTFE Step 1: In a 22 litres reactor equipped with a mechanical stirrer operating at 460 rpm, 13.5 l of demineralized water and 54 ml of a micro-emulsion, previously obtained by mixing 12.0 ml of a perfluoropolyoxyalkylene having acidic end groups of formula $CF_2ClO(CF_2\text{-}CF(CF_3)O)_n(CF_2O)_mCF_2COOH$, wherein n/m = 10, having an average molecular weight of 600, 7.5 ml of a 30% v/v $NH_4OH$ aqueous solution, 27.0 ml of demineralized water and 7.5 ml of GALDEN® D02 perfluoropolyether of formula $CF_3O(CF_2CF(CF_3)O)_n(CF_2O)_mCF_3$, wherein n/m = 20, having an average molecular weight of 450, were introduced.

The reactor was heated and maintained at a set-point temperature of 80°C; a mixture of vinylidene fluoride (VDF) (78.5% moles) and hexafluoropropylene (HFP) (21.5% moles) was then added to reach a final pressure of 25 bar. Then, 20 g of 1,4-diiodoperfluorobutane ($C_4F_8I_2$) as chain transfer agent were introduced, and 3.0 g of ammonium persulfate (APS) as initiator were introduced. Pressure was maintained at a set-point of 25 bar by continuous feeding of a gaseous mixture of vinylidene fluoride (VDF) (78.5% by moles) and hexafluoropropylene (HFP) (21.5% by moles) up to a total of 4800 g.

Once 4800 g of monomer mixture were fed to the reactor, the reaction was discontinued by cooling the reactor to room temperature. The residual pressure fell down while keeping the reaction temperature constant, then, the reactor was cooled, vented and the latex recovered.

The aqueous latex so obtained had a solid content of 27% by weight.

Step 2:

In an 18 litres enamelled reactor equipped with baffles and mechanical stirrer operating at 600 rpm, 8 kg of the aqueous latex obtained in the Step 1, 2 l of demineralized water and 1 kg of chlorotrifluoroethylene were introduced. Then, the temperature was brought to 75°C and ethylene was fed up to a pressure of 21 absolute bars and 2.5 g of ammonium persulfate (APS) as initiator were introduced. Pressure was maintained at a set-point of 21 bar by continuous feeding of ethylene up to a total of 110 g. Then, the reactor was cooled, vented and the latex recovered. The latex was treated with sodium sulphate to effect coagulation, and the solid coagulate so formed was separated from the aqueous phase, washed with demineralized water and dried in a convection oven at 60°C for 16 hours. Characterization data of the polymer so obtained are summarized in Table 1.

Comparative Example 2: block copolymer having structure PVDF-P(VDF-HFP)-PVDF (P(VDF-HFP) VDF: 78.5% by moles, HFP: 21.5% by moles)

In a 7.5 litres reactor equipped with a mechanical stirrer operating at 72 rpm, 4.5 l of demineralized water and 22 ml of a micro-emulsion, previously obtained by mixing 4.8 ml of a perfluoropolyoxyalkylene having acidic end groups of formula $CF_2ClO(CF_2\text{-}CF(CF_3)O)_n(CF_2O)_mCF_2COOH$, wherein n/m = 10, having an average molecular weight of 600, 3.1 ml of a 30% v/v $NH_4OH$ aqueous solution, 11.0 ml of demineralized water and 3.0 ml of GALDEN® D02 perfluoropolyether of formula $CF_3O(CF_2CF(CF_3)O)_n(CF_2O)_mCF_3$, wherein n/m = 20, having an average molecular weight of 450, were introduced.

The reactor was heated and maintained at a set-point temperature of 85°C; a mixture of vinylidene fluoride (VDF) (78.5% moles) and hexafluoropropylene (HFP) (21.5% moles) was then added to reach a final pressure of 20 bar. Then, 8 g of 1,4-diiodoperfluorobutane ($C_4F_8I_2$) as chain transfer agent were introduced, and 1.25 g of ammonium

persulfate (APS) as initiator were introduced. Pressure was maintained at a set-point of 20 bar by continuous feeding of a gaseous mixture of vinylidene fluoride (VDF) (78.5% by moles) and hexafluoropropylene (HFP) (21.5% by moles) up to a total of 2000 g. Moreover, 0.86 g of $CH_2=CH-(CF_2)_6-CH=CH_2$, fed in 20 equivalent portions each 5% increase in conversion, were introduced.

Once 2000 g of monomer mixture were fed to the reactor, the reaction was discontinued by cooling the reactor to room temperature. The residual pressure was then released, reactor vented and then the temperature brought again to 80°C. VDF was then fed into the autoclave up to a pressure of 20 bar, and 0.14 g of ammonium persulfate (APS) as initiator were introduced. Pressure was maintained at a set-point of 20 bar by continuous feeding of VDF up to a total of 500 g. Then, the reactor was cooled, vented and the latex recovered. The latex was treated with aluminum sulphate to effect coagulation, the coagulate so formed was separated from the aqueous phase, washed with demineralized water and dried in a convection oven at 90°C for 16 hours. Characterization data of the polymer so obtained are summarized in Table 1.

Table 1

| | | | Ex. 1 | | Ex. 2C | |
|---|---|---|---|---|---|---|
| DSC | | | | | | |
| $T_g$ | [°C] | | -20.5 | | -21.5 | |
| $T_m$ | [°C] | | 202 | | 162.5 | |
| $\Delta H_{XX}$ | [J/g] | | 5.9 | | n.d. | |
| Composition - NMR | | | soft (A) | $F_{(A)}$ | soft (A) | $F_{(A)}$ |
| VDF | [% mol] | | 78.5 | 0.80 | 78.5 | 0.80 |
| HFP | [% mol] | | 21.5 | | 21.5 | |
| Composition | | | hard (B) (*) | $F_{(B)}$ | hard (B) (**) | $F_{(B)}$ |
| Et | [% mol] | | 46 | 0.20 | 0 | 0.20 |
| CTFE | [% mol] | | 54 | | 0 | |
| VDF | [% mol] | | 0 | | 100 | |
| Sealing Properties | | | | | | |
| C-set @ 23°C | | 24h | 19 | | 45 | |
| C-set @ 70°C | | 24h | 47 | | 73 | |

(*) determined notably by elemental analysis, including through determination of chlorine content; (**): determined by NMR analysis.

As evidenced from $\Delta H_{XX}$ and $F_{(B)}$ data comprised above, the polymer of Ex. 1 is such to satisfy the inequality 1.5 J/g $\leq \Delta H_{XX} \leq F_{(B)} \cdot 35$ J/g, more specifically: 1.5 J/g ≤ 5.9 ≤ 7 J/g. The said polymer, when compared with fluorinated thermoplastic elastomer having substantially same hard/soft components' balance, possesses much improved sealing performances, with C-set values of largely below those obtained when the hard segment was a PVDF-type block, and maintained even at higher temperature. This is due to the surprising finding that the peculiar microstructure of the ECTFE-type thermoplastic blocks, as obtained by emulsion polymerization, thanks to the particular microcrystalline behaviour, is delivering improved self-reinforcing ability, while yet maximizing elastomeric performances.

## Claims

**1.** A fluorinated thermoplastic elastomer [polymer (F-TPE)] comprising:

- at least one elastomeric block (A) consisting of a sequence of recurring units, said sequence comprising recurring units derived from at least one fluorinated monomer, said block (A) possessing a glass transition temperature of less than 25°C, as determined according to ASTM D3418, and
- at least one thermoplastic block (B) consisting of a sequence of recurring units, said sequence comprising recurring units derived from ethylene and recurring units derived from chlorotrifluoroethylene,

wherein said polymer (F-TPE) possesses a melting point ($T_m$) of at least 180°C and a heat of crystallization ($\Delta H_{XX}$) respecting the following inequality: 1.5 J/g $\leq \Delta H_{XX} \leq F_{(B)} \cdot 35$ J/g
wherein $T_m$ and $\Delta H_{XX}$ are determined according to ASTM D3418, and wherein in above-mentioned inequality $F_{(B)}$ is the weight ratio $Wt_{(B)}/[Wt_{(A)}+Wt_{(B)}]$, whereas $Wt_{(A)}$ is the weight of block(s) (A) and $Wt_{(B)}$ is the weight of block(s) (B).

**2.** The fluorinated thermoplastic elastomer of claim 1, which is a block copolymer, said block copolymer having a structure comprising at least one block (A) alternated to at least one block (B) of type (B)-(A)-(B), i.e. comprising a central block (A) having two ends, connected at both ends to a side block (B).

**3.** The fluorinated thermoplastic elastomer of claim 1 or 2, wherein the fluorinated monomer of Claim 1 is selected from the group consisting of:

(a) $C_2$-$C_8$ perfluoroolefins such as tetrafluoroethylene (TFE), hexafluoropropylene (HFP), perfluoroisobutylene;
(b) hydrogen-containing $C_2$-$C_8$ fluoroolefins, such as vinylidene fluoride (VDF), vinyl fluoride, trifluoroethylene (TrFE), hexafluoroisobutylene (HFIB), perfluoroalkyl ethylenes of formula $CH_2$=CH-$R_{f1}$, wherein $R_{f1}$ is a $C_1$-$C_6$ perfluoroalkyl group;
(c) $C_2$-$C_8$ chloro- and/or bromo-containing fluoroolefins such as chlorotrifluoroethylene (CTFE);
(d) fluoroalkylvinylethers of formula $CF_2$=$CFOR_{fa}$, wherein $R_{fa}$ is a $C_1$-$C_6$ fluoroalkyl group, such as $CF_3$, $C_2F_5$ or $C_3F_7$;
(e) fluorooxyalkylvinylethers of formula $CF_2$=$CFOX_{0a}$, wherein $X_{0a}$ is a a $C_1$-$C_{12}$ fluorooxyalkyl group comprising one or more than one ethereal oxygen atom, including notably fluoromethoxyalkylvinylethers of formula $CF_2$=$CFOCF_2$ $OR_{fb}$, with $R_{fb}$ being a $C_1$-$C_3$ fluoro(oxy)alkyl group, such as -$CF_2CF_3$, -$CF_2$ $CF_2$-O-$CF_3$ and -$CF_3$; and
(f) (per)fluorodioxoles of formula:

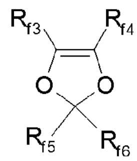

wherein each of $R_{f3}$, $R_{f4}$, $R_{f5}$ and $R_{f6}$, equal to or different from each other, is independently a fluorine atom, a $C_1$-$C_6$ perfluoro(oxy)alkyl group, optionally comprising one or more oxygen atoms, such as -$CF_3$, -$C_2F_5$, -$C_3F_7$, -$OCF_3$ or -$OCF_2CF_2OCF_3$.

**4.** The fluorinated thermoplastic elastomer of claim 1 or 2, which comprises, preferably consists of:

- at least one elastomeric block (A) selected from the group consisting of:

(1) vinylidene fluoride (VDF)-based elastomeric blocks ($A_{VDF}$) consisting of a sequence of recurring units, said sequence comprising recurring units derived from VDF and recurring units derived from at least one fluorinated monomer different from VDF, said fluorinated monomer different from VDF being typically selected from the group consisting of:

(a) $C_2$-$C_8$ perfluoroolefins such as tetrafluoroethylene (TFE), hexafluoropropylene (HFP);
(b) hydrogen-containing $C_2$-$C_8$ fluoroolefins different from VDF, such as vinyl fluoride, trifluoroethylene (TrFE), hexafluoroisobutylene (HFIB), perfluoroalkyl ethylenes of formula $CH_2$=CH-$R_{f1}$, wherein $R_{f1}$ is a $C_1$-$C_6$ perfluoroalkyl group;
(c) $C_2$-$C_8$ chloro- and/or bromo-containing fluoroolefins such as chlorotrifluoroethylene (CTFE);
(d) perfluoroalkylvinylethers (PAVE) of formula $CF_2$=$CFOR_{f1}$, wherein $R_{f1}$ is a $C_1$-$C_6$ perfluoroalkyl group, such as $CF_3$(PMVE), $C_2F_5$ or $C_3F_7$;
(e) perfluorooxyalkylvinylethers of formula $CF_2$=$CFOX_0$, wherein $X_0$ is a a $C_1$ -$C_{12}$ perfluorooxyalkyl group comprising one or more than one ethereal oxygen atom, including notably perfluoromethoxy-alkylvinylethers of formula $CF_2$ =$CFOCF_2OR_{f2}$, with $R_{f2}$ being a $C_1$-$C_3$ perfluoro(oxy)alkyl group, such as -$CF_2CF_3$, -$CF_2CF_2$-O-$CF_3$ and -$CF_3$; and
(f) (per)fluorodioxoles of formula:

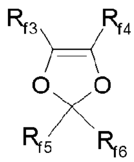

wherein each of $R_{f3}$, $R_{f4}$, $R_{f5}$ and $R_{f6}$, equal to or different from each other, is independently a fluorine atom, a $C_1$-$C_6$ perfluoro(oxy)alkyl group, optionally comprising one or more oxygen atoms, such as $-CF_3$, $-C_2F_5$, $-C_3F_7$, $-OCF_3$ or $-OCF_2CF_2OCF_3$; and

(2) tetrafluoroethylene (TFE)-based elastomeric blocks ($A_{TFE}$) consisting of a sequence of recurring units, said sequence comprising recurring units derived from TFE and recurring units derived from at least one fluorinated monomer different from TFE, said fluorinated monomer being typically selected from the group consisting of those of classes (b), (c), (d), (e) as defined above;

- at least one thermoplastic block (B) consisting of a sequence of recurring units derived from at least one fluorinated monomer.

**5.** The fluorinated thermoplastic elastomer of anyone of the preceding claims, wherein the elastomeric block (A) further comprises recurring units derived from at least one bis-olefin [bis-olefin (OF)] of formula:

$$R_AR_B=CR_C-T-CR_D=R_ER_F$$

wherein $R_A$, $R_B$, $R_C$, $R_D$, $R_E$ and $R_F$, equal to or different from each other, are selected from the group consisting of H, F, Cl, $C_1$-$C_5$ alkyl groups and $C_1$-$C_5$ (per)fluoroalkyl groups, and T is a linear or branched $C_1$-$C_{18}$ alkylene or cycloalkylene group, optionally comprising one or more than one ethereal oxygen atom, preferably at least partially fluorinated, or a (per)fluoropolyoxyalkylene group.

**6.** The fluorinated thermoplastic elastomer of anyone of the preceding claims, wherein block (B) consists of a sequence of recurring units, said sequence of recurring units of block (B) consisting essentially of:

(j) from 40 to 60% by moles of recurring units derived from ethylene (E);
(jj) from 60 to 40% by moles of recurring units derived from chlorotrifluoroethylene (CTFE); and
(jjj) from 0 to 10% by moles, preferably from 0 to 5%, more preferably from 0 to 2.5 % by moles, of recurring units derived from of at least one fluorinated monomer(s) and/or hydrogenated monomer(s) different from E, and CTFE, the % by moles being referred to the overall moles of recurring units of block (B).

**7.** The fluorinated thermoplastic elastomer of anyone of the preceding claims,
wherein block (B) are selected from the group consisting of those consisting of sequence of recurring units derived from:

(j) from 45 to 55 % by moles of ethylene (E);
(jj) from 55 to 45 % by moles of chlorotrifluoroethylene (CTFE), and optionally
(jjj) from 0 to 2.5 % by moles of at least one (per)fluoroalkylvinylethers complying with formula $CF_2=CFOR_{fc}$ in which $R_{fc}$ is a $C_1$-$C_6$ fluoro- or perfluoroalkyl, e.g. $CF_3$, $C_2F_5$, $C_3F_7$,

the % by moles being referred to the overall moles of recurring units of block (B).

**8.** The fluorinated thermoplastic elastomer of anyone of the preceding claims, which possesses a heat of crystallization ($\Delta H_{XX}$) respecting the following inequality:
$1.5\ J/g \leq \Delta H_{XX} \leq F_{(B)} \cdot 35\ J/g$,
preferably respecting the following inequality:
$2.0\ J/g \leq \Delta H_{XX} \leq F_{(B)} \cdot 30\ J/g$,
wherein $\Delta H_{XX}$ is determined according to ASTM D3418, and wherein in above-mentioned inequalities $F_{(B)}$ is the weight ratio $Wt_{(B)}/[Wt_{(A)}+Wt_{(B)}]$, whereas $Wt_{(A)}$ is the weight of block(s) (A) and $Wt_{(B)}$ is the weight of block(s) (B).

**9.** The fluorinated thermoplastic elastomer of anyone of the preceding claims, wherein the weight ratio between blocks

(A) and blocks (B) in the fluorinated thermoplastic elastomer is typically comprised between 95:5 and 10:90, i.e. $F_{(B)}$ values ranging from 0.05 to 0.90.

**10.** A method for manufacturing the fluorinated thermoplastic elastomer of anyone of the preceding claims, said method comprising the following sequential steps:

(a) emulsion-polymerizing at least one fluorinated monomer, and possibly at least one bis-olefin (OF), in an aqueous medium in the presence of a radical initiator and of an iodinated chain transfer agent, thereby providing a pre-polymer consisting of at least one block (A) containing one or more iodinated end groups dispersed in an aqueous medium; and
(b) emulsion-polymerizing ethylene (E) and chlorotrifluoroethylene (CTFE), and optionally one or more than one fluorinated monomer and/or hydrogenated monomer different from E and CTFE, in the presence of a radical initiator and in the presence of the pre-polymer dispersed in the said aqueous medium as obtained from step (a), thereby providing at least one block (B) grafted on said pre-polymer through reaction of the said iodinated end groups of the block (A).

**11.** A composition (C) comprising the polymer (F-TPE) according to anyone of Claims 1 to 10 in combination with at least one additional component, which is advantageously selected from the group consisting of reinforcing agents, pigments, processing aids, plasticizers, stabilizers (including thermal stabilizers, UV stabilizers), acid scavengers, mold release agents, and curing systems.

**12.** A method for manufacturing a shaped article, said method comprising moulding polymer (F-TPE) according to anyone of Claims 1 to 10 or composition (C) of claim 11 so as to provide said shaped article.

**13.** The method of claim 12, wherein moulding is achieved by at least one of compression moulding, extrusion moulding, injection moulding, transfer moulding.

**14.** The method of claim 12, said method including a step of machining of a standard shaped part so as to obtain the targeted shaped article having different size and shape from said standard shaped part.

**15.** A shaped article made from polymer (F-TPE) according to anyone of claims 1 to 10 or from the composition (C) of Claim 11.

**Patentansprüche**

**1.** Fluoriertes thermoplastisches Elastomer [Polymer (F-TPE)], umfassend:

- mindestens einen elastomeren Block (A), bestehend aus einer Sequenz von Wiederholungseinheiten, wobei die Sequenz Wiederholungseinheiten, die sich von mindestens einem fluorierten Monomer ableiten, umfasst, wobei der Block (A) eine Glasübergangstemperatur von weniger als 25 °C gemäß Bestimmung nach ASTM D3418 besitzt, und
- mindestens einen thermoplastischen Block (B), bestehend aus einer Sequenz von Wiederholungseinheiten, wobei die Sequenz Wiederholungseinheiten, die sich von Ethylen ableiten, und Wiederholungseinheiten, die sich von Chlortrifluorethylen ableiten, umfasst,

wobei das Polymer (F-TPE) einen Schmelzpunkt ($T_m$) von mindestens 180 °C und eine die folgende Ungleichung erfüllende Kristallisationswärme ($\Delta H_{XX}$) besitzt:
$1{,}5\ J/g \leq \Delta H_{XX} \leq F_{(B)} \cdot 35\ J/g$,
wobei $T_m$ und $\Delta H_{XX}$ gemäß ASTM D3418 bestimmt werden und wobei in der obigen Ungleichung $F_{(B)}$ des Gewichtsverhältnis $Wt_{(B)}/[Wt_{(A)}+Wt_{(B)}]$ ist, während $Wt_{(A)}$ das Gewicht des Blocks bzw. der Blöcke (A) ist und $Wt_{(B)}$ das Gewicht des Blocks bzw. der Blöcke (B) ist.

**2.** Fluoriertes thermoplastisches Elastomer nach Anspruch 1, bei dem es sich um ein Blockcopolymer handelt, wobei das Blockcopolymer eine Struktur, die mindestens einen Block (A) umfasst, der mit mindestens einem Block (B) alternierend, des Typs (B)-(A)-(B) aufweist, d. h. einen zentralen Block (A) mit zwei Enden umfasst, der an beiden Enden mit einem Seitenblock (B) verbunden ist.

**3.** Fluoriertes thermoplastisches Elastomer nach Anspruch 1 oder 2, wobei das fluorierte Monomer von Anspruch 1 aus der Gruppe bestehend aus

(a) $C_2$-$C_8$-Perfluorolefinen wie Tetrafluorethylen (TFE), Hexafluorpropylen (HFP), Perfluorisobutylen;
(b) wasserstoffhaltigen $C_2$-$C_8$-Fluorolefinen, wie Vinylidenfluorid (VDF), Vinylfluorid, Trifluorethylen (TrFE), Hexafluorisobutylen (HFIB), Perfluoralkylethylenen der Formel $CH_2$=CH-$R_{f1}$, worin $R_{f1}$ für eine $C_1$-$C_6$-Perfluoroxyalkylgruppe steht;
(c) chlor- und/oder bromhaltigen $C_2$-$C_8$-Fluorolefinen wie Chlortrifluorethylen (CTFE);
(d) Fluoralkylvinylethern der Formel $CF_2$=CFO$R_{fa}$, worin $R_{fa}$ für eine $C_1$-$C_6$-Fluoralkylgruppe, wie $CF_3$, $C_2F_5$ oder $C_3F_7$, steht;
(e) Fluoroxyalkylvinylethern der Formel $CF_2$=CFO$X_{0a}$, worin $X_{0a}$ für eine $C_1$-$C_{12}$-Fluoroxyalkylgruppe mit einem oder mehr als einem etherischen Wasserstoffatom steht, einschließlich insbesondere Fluormethoxyalkylvinylethern der Formel $CF_2$=CFO$CF_2$O$R_{fb}$, wobei $R_{fb}$ für eine $C_1$-$C_3$-Fluor (oxy) alkylgruppe, wie -$CF_2CF_3$, -$CF_2CF_2$-O-$CF_3$ und -$CF_3$, steht; und
(f) (Per)fluordioxolen der Formel:

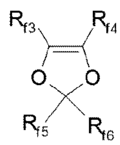

worin $R_{f3}$, $R_{f4}$, $R_{f5}$ und $R_{f6}$, die gleich oder voneinander verschieden sind, jeweils unabhängig voneinander für ein Fluoratom, eine $C_1$-$C_6$-Perfluor(oxy)alkylgruppe, die gegebenenfalls ein oder mehrere Sauerstoffatome enthält, wie -$CF_3$, -$C_2F_5$, -$C_3F_7$, -$OCF_3$ oder -$OCF_2CF_2OCF_3$, stehen; ausgewählt ist.

**4.** Fluoriertes thermoplastisches Elastomer nach Anspruch 1 oder 2, das

- mindestens einen elastomeren Block (A) aus der Gruppe bestehend aus:

(1) auf Vinylidenfluorid (VDF) basierenden elastomeren Blöcken ($A_{VDF}$), die aus einer Sequenz von Wiederholungseinheiten bestehen, wobei die Sequenz Wiederholungseinheiten, die sich von VDF ableiten, und Wiederholungseinheiten, die sich von mindestens einem fluorierten Monomer, das von VDF verschieden ist, ableiten, umfasst, wobei das fluorierte Monomer, das von VDF verschieden ist, typischerweise aus der Gruppe bestehend aus

(a) $C_2$-$C_8$-Perfluorolefinen wie Tetrafluorethylen (TFE), Hexafluorpropylen (HFP);
(b) wasserstoffhaltigen $C_2$-$C_8$-Fluorolefinen, die von VDF verschieden sind, wie Vinylfluorid, Trifluorethylen (TrFE), Hexafluorisobutylen (HFIB), Perfluoralkylethylenen der Formel $CH_2$=CH-$R_{f1}$, worin $R_{f1}$ für ein $C_1$-$C_6$-(Per) fluoralkyl oder eine $C_1$-$C_6$-Perfluoroxyalkylgruppe steht;
(c) chlor- und/oder bromhaltigen $C_2$-$C_8$-Fluorolefinen wie Chlortrifluorethylen (CTFE);
(d) Perfluoralkylvinylethern (PAVE) der Formel $CF_2$=CFO$R_{f1}$, worin $R_{f1}$ für eine $C_1$-$C_6$-Perfluoralkylgruppe, wie $CF_3$ (PMVE), $C_2F_5$ oder $C_3F_7$, steht;
(e) Perfluoroxyalkylvinylethern der Formel $CF_2$=CFO$X_{0a}$, worin $X_0$ für eine $C_1$-$C_{12}$-Perfluoroxy-alkylgruppe mit einem oder mehr als einem etherischen Wasserstoffatom steht, einschließlich insbesondere Fluormethoxyalkylvinylethern der Formel $CF_2$=CFO$CF_2$O$R_{f2}$, wobei $R_{f2}$ für eine $C_1$-$C_3$-Perfluor (oxy) alkylgruppe, wie -$CF_2CF_3$, -$CF_2CF_2$-O-$CF_3$ und -$CF_3$, steht; und
(f) (Per)fluordioxolen der Formel:

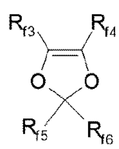

worin $R_{f3}$, $R_{f4}$, $R_{f5}$ und $R_{f6}$, die gleich oder voneinander verschieden sind, jeweils unabhängig voneinander für ein Fluoratom, eine $C_1$-$C_6$-Perfluor(oxy)alkylgruppe, die gegebenenfalls ein oder mehrere Sauerstoffatome enthält, wie -$CF_3$, -$C_2F_5$, -$C_3F_7$, -$OCF_3$ oder -$OCF_2CF_2OCF_3$, stehen;

ausgewählt ist;

(2) auf Tetrafluorethylen (TFE) basierenden elastomeren Blöcken ($A_{TFE}$), die aus einer Sequenz von Wiederholungseinheiten bestehen, wobei die Sequenz Wiederholungseinheiten, die sich von TFE ableiten, und Wiederholungseinheiten, die sich von mindestens einem fluorierten Monomer, das von TFE verschieden ist, ableiten, umfasst, wobei das fluorierte Monomer typischerweise aus der Gruppe bestehend aus denjenigen der Klassen (b, (c), (d), (e) gemäß obiger Definition ausgewählt ist;

- mindestens einen thermoplastischen Block (B), der aus einer Sequenz von Wiederholungseinheiten, die sich von mindestens einem fluorierten Monomer ableiten, besteht;
umfasst und vorzugsweise daraus besteht.

**5.** Fluoriertes thermoplastisches Elastomer nach einem der vorhergehenden Ansprüche, wobei der Elastomere Block (A) ferner Wiederholungseinheiten umfasst, die sich von mindestens einem Bisolefin [Bisolefin (OF)] der Formel:

$$R_AR_B=CR_C-T-CR_D-R_ER_F$$

ableiten, worin $R_A$, $R_B$, $R_C$, $R_D$, $R_E$ und $R_F$, die gleich oder voneinander verschieden sind, aus der Gruppe bestehend aus H, F, Cl, $C_1$-$C_5$-Alkylgruppen und $C_1$-$C_5$-(Per)fluoralkylgruppen ausgewählt sind und T für eine lineare oder verzweigte $C_1$-$C_{18}$-Alkylen- oder Cycloalkylengruppe, die gegebenenfalls ein oder mehr als ein etherisches Sauerstoffatom umfasst und vorzugsweise mindestens teilweise fluoriert ist, oder eine (Per)fluorpoly-oxyalkylengruppe steht.

**6.** Fluoriertes thermoplastisches Elastomer nach einem der vorhergehenden Ansprüche, wobei Block (B) aus einer Sequenz von Wiederholungseinheiten besteht, wobei die Sequenz von Wiederholungseinheiten von Block (B) im Wesentlichen aus

(j) 40 bis 60 Mol-% Wiederholungseinheiten, die sich von Ethylen (E) ableiten;
(jj) 60 bis 40 Mol-% Wiederholungseinheiten, die sich von Chlortrifluorethylen (CTFE) ableiten; und
(jjj) 0 bis 10 Mol-%, vorzugsweise 0 bis 5 Mol-%, weiter bevorzugt 0 bis 2,5 Mol-%, Wiederholungseinheiten, die sich von mindestens einem fluorierten Monomer und/oder hydrierten Monomer, das von E und CTFE verschieden ist, ableiten, besteht, wobei sich die Mol-%-Angaben auf die gesamten Mole von Wiederholungseinheiten von Block (B) beziehen.

**7.** Fluoriertes thermoplastisches Elastomer nach einem der vorhergehenden Ansprüche, wobei Block (B) aus der Gruppe ausgewählt ist, die aus denjenigen besteht, die aus einer Sequenz von Wiederholungseinheiten bestehen, die sich von

(j) 45 bis 55 Mol-% Ethylen (E);
(jj) 55 bis 45 Mol-% Chlortrifluorethylen (CTFE) und gegebenenfalls
(jjj) 0 bis 2,5 Mol-%, mindestens eines (Per)fluoralkylvinylethers, der der Formel $CF_2=CFOR_{fc}$ entspricht, wobei $R_{fc}$ für ein $C_1$-$C_6$-Fluor-oder -Perfluoralkyl, z. B. $CF_3$, $C_2F_5$, $C_3F_7$, steht;

ableiten, wobei sich die Mol-%-Angaben auf die gesamten Mole von Wiederholungseinheiten von Block (B) beziehen.

**8.** Fluoriertes thermoplastisches Elastomer nach einem der vorhergehenden Ansprüche, das eine Kristallisationswärme ($\Delta H_{XX}$) besitzt, die die folgende Ungleichung erfüllt:
$1{,}5\ J/g \le \Delta H_{XX} \le F_{(B)} \cdot 35\ J/g$,
vorzugsweise die folgende Ungleichung erfüllt:
$2{,}0\ J/g \le \Delta H_{XX} \le F_{(B)} \cdot 30\ J/g$,
wobei $\Delta H_{XX}$ gemäß ASTM D3418 bestimmt wird und wobei in den obigen Ungleichungen $F_{(B)}$ des Gewichtsverhältnis $Wt_{(B)}/[Wt_{(A)}+Wt_{(B)}]$ ist, während $Wt_{(A)}$ das Gewicht des Blocks bzw. der Blöcke (A) ist und $Wt_{(B)}$ das Gewicht des Blocks bzw. der Blöcke (B) ist.

**9.** Fluoriertes thermoplastisches Elastomer nach einem der vorhergehenden Ansprüche, wobei das Gewichtsverhältnis zwischen Blöcken (A) und Blöcken (B) in dem fluorierten thermoplastischen Elastomer typischerweise zwischen 95:5 und 10:90 liegt, d. h. $F_{(B)}$-Werte im Bereich von 0,05 bis 0,90 liegen.

**10.** Verfahren zur Herstellung des fluorierten thermoplastischen Elastomers nach einem der vorhergehenden Ansprüche, wobei das Verfahren die folgenden aufeinanderfolgenden Schritte umfasst:

(a) Emulsionspolymerisation mindestens eines fluorierten Monomers und gegebenenfalls mindestens eines Bisolefins (OF) in einem wässrigen Medium in Gegenwart eines Radikalinitiators und eines iodierten Kettenübertragungsmittels, wodurch ein Prepolymer, das aus mindestens einem eine oder mehrere iodierte Endgruppen enthaltenden Block (A) besteht und in einem wässrigen Medium dispergiert ist, bereitgestellt wird; und
(b) Emulsionspolymerisation von Ethylen (E) und Chlortrifluorethylen (CTFE) und gegebenenfalls einem oder mehr als einem fluorierten Monomer und/oder hydrierten Monomer, das von E und CTFE verschieden ist, in Gegenwart eines Radikalinitiators und in Gegenwart des in dem wässrigen Medium dispergierten Prepolymers aus Schritt (a), wodurch mindestens ein durch Reaktion der iodierten Endgruppen des Blocks (A) auf das Prepolymer aufgepfropfter Block (B) bereitgestellt wird.

**11.** Zusammensetzung (C), umfassend das Polymer (F-TPE) nach einem der Ansprüche 1 bis 10 in Kombination mit mindestens einer zusätzlichen Komponente, die vorteilhafterweise aus der Gruppe bestehend aus Verstärkungsmitteln, Pigmenten, Verarbeitungshilfen, Weichmachern, Stabilisatoren (einschließlich Wärmestabilisatoren, UV-Stabilisatoren), Säurefängern, Formtrennmitteln und Härtungssystemen ausgewählt ist.

**12.** Verfahren zur Herstellung eines Formkörpers, bei dem man das Polymer (F-TPE) nach einem der Ansprüche 1 bis 10 oder die Zusammensetzung (C) nach Anspruch 11 zur Bereitstellung des Formkörpers formt.

**13.** Verfahren nach Anspruch 12, wobei das Formen durch Formpressen, Extrudieren, Spritzguss und/oder Spritzpressen erreicht wird.

**14.** Verfahren nach Anspruch 12, wobei das Verfahren einen Schritt der maschinellen Bearbeitung eines Standardformteils zum Erhalt des gewünschten Formkörpers, der eine von dem Standardformteil verschiedene Größe und Gestalt aufweist, umfasst.

**15.** Formkörper aus dem Polymer (F-TPE) nach einem der Ansprüche 1 bis 10 oder aus der Zusammensetzung (C) nach Anspruch 11.

## Revendications

**1.** Élastomère thermoplastique fluoré [polymère (F-TPE)] comprenant :

- au moins un bloc élastomérique (A) constitué d'une séquence de motifs répétitifs, ladite séquence comprenant des motifs répétitifs issus d'au moins un monomère fluoré, ledit bloc (A) possédant une température de transition vitreuse inférieure à 25 °C, telle que déterminée selon la norme ASTM D3418, et
- au moins un bloc thermoplastique (B) constitué d'une séquence de motifs répétitifs, ladite séquence comprenant des motifs répétitifs issus d'éthylène et des motifs répétitifs issus de chlorotrifluoroéthylène,

ledit polymère (F-TPE) possédant un point de fusion ($T_m$) d'au moins 180 °C et une chaleur de cristallisation ($\Delta H_{XX}$) respectant l'inégalité suivante :
$1{,}5\ J/g \leq \Delta H_{XX} \leq F_{(B)} \cdot 35\ J/g$,
$T_m$ et $\Delta H_{XX}$ étant déterminés selon la norme ASTM D3418, et dans l'inégalité mentionnée ci-dessus $F_{(B)}$ étant le rapport en poids $Wt_{(B)}/[Wt_{(A)} + Wt_{(B)}]$, $Wt_{(A)}$ étant le poids du ou des bloc (s) (A) et $Wt_{(B)}$ étant le poids du ou des bloc(s) (B).

**2.** Élastomère thermoplastique fluoré selon la revendication 1, qui est un copolymère à blocs, ledit copolymère à bloc possédant une structure comprenant au moins un bloc (A) alterné avec au moins un bloc (B) de type (B)-(A)-(B), c'est-à-dire comprenant un bloc central (A) possédant deux terminaisons, relié au niveau des deux terminaisons à un bloc latéral (B).

**3.** Élastomère thermoplastique fluoré selon la revendication 1 ou 2, le monomère fluoré de la revendication 1 étant choisi dans le groupe constitué par :

(a) des $C_2$-$C_8$ perfluorooléfines telles que le tétrafluoroéthylène (TFE), l'hexafluoropropylène (HFP), le

perfluoroisobutylène ;

(b) des $C_2$-$C_8$ fluorooléfines contenant de l'hydrogène, telles que le fluorure de vinylidène (VDF), le fluorure de vinyle, le trifluoroéthylène (TrFE), l'hexafluoroisobutylène (HFIB), des perfluoroalkyléthylènes de formule $CH_2$=CH-$R_{f1}$, $R_{f1}$ étant un groupe $C_1$-$C_6$ perfluoroalkyle ;

(c) des $C_2$-$C_8$ fluorooléfines contenant chloro et/ou bromo telles que le chlorotrifluoroéthylène (CTFE) ;

(d) des fluoroalkylvinyléthers de formule $CF_2$=CFOR$_{fa}$, $R_{fa}$ étant un groupe $C_1$-$C_6$ fluoroalkyle, tel que $CF_3$, $C_2F_5$ ou $C_3F_7$;

(e) des fluorooxyalkylvinyléthers de formule $CF_2$=CFOX$_{0a}$, $X_{0a}$ étant un groupe $C_1$-$C_{12}$ fluorooxyalkyle comprenant un ou plus d'un atome d'oxygène d'éther, y compris notamment des fluorométhoxyalkylvinyléthers de formule $CF_2$=CFOCF$_2$OR$_{fb}$, $R_{fb}$ étant un groupe $C_1$-$C_3$ fluoro(oxy) alkyle, tel que -$CF_2CF_3$, -$CF_2CF_2$-O-$CF_3$ et -$CF_3$; et

(f) des (per)fluorodioxoles de formule :

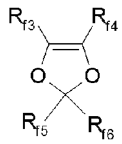

chacun parmi $R_{f3}$, $R_{f4}$, $R_{f5}$ et $R_{f6}$, identiques ou différents les uns des autres, étant indépendamment un atome de fluor, un groupe $C_1$-$C_6$ perfluoro(oxy) alkyle, éventuellement comprenant un ou plusieurs atomes d'oxygène, tel que -$CF_3$, -$C_2F_5$, -$C_3F_7$, -$OCF_3$ ou - $OCF_2CF_2OCF_3$.

**4.** Élastomère thermoplastique fluoré selon la revendication 1 ou 2, qui comprend, préférablement est constitué de :

- au moins un bloc élastomérique (A) choisi dans le groupe constitué par :

(1) des blocs élastomériques ($A_{VDF}$) à base de fluorure de vinylidène (VDF) constitués d'une séquence de motifs répétitifs, ladite séquence comprenant des motifs répétitifs issus du VDF et des motifs répétitifs issus d'au moins un monomère fluoré différent du VDF, ledit monomère fluoré différent du VDF étant typiquement choisi dans le groupe constitué par :

(a) des $C_2$-$C_8$ perfluorooléfines telles que le tétrafluoroéthylène (TFE), l'hexafluoropropylène (HFP) ;

(b) des $C_2$-$C_8$ fluorooléfines contenant de l'hydrogène différentes du VDF, telles que le fluorure vinyle, le trifluoroéthylène (TrFE), l'hexafluoroisobutylène (HFIB), des perfluoroalkyléthylènes de formule $CH_2$=CH-$R_{f1}$, $R_{f1}$ étant un groupe $C_1$-$C_6$ perfluoroalkyle ;

(c) des $C_2$-$C_8$ fluorooléfines contenant chloro et/ou bromo telles que le chlorotrifluoroéthylène (CTFE) ;

(d) des perfluoroalkylvinyléthers (PAVE) de formule $CF_2$=CFOR$_{f1}$, $R_{f1}$ étant un groupe $C_1$-$C_6$ perfluoroalkyle, tel que $CF_3$ (PMVE), $C_2F_5$ ou $C_3F_7$;

(e) des perfluorooxyalkylvinyléthers de formule $CF_2$=CFOX$_0$, $X_0$ étant un groupe $C_1$-$C_{12}$ perfluorooxyalkyle comprenant un ou plus d'un atome d'oxygène d'éther, y compris notamment des perfluorométhoxyalkylvinyléthers de formule $CF_2$=CFOCF$_2$OR$_{f2}$, $R_{f2}$ étant un groupe $C_1$-$C_3$ perfluoro(oxy) alkyle, tel que -$CF_2CF_3$, -$CF_2CF_2$-O-$CF_3$ et -$CF_3$; et

(f) des (per)fluorodioxoles de formule :

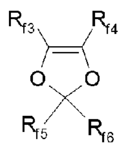

chacun parmi $R_{f3}$, $R_{f4}$, $R_{f5}$ et $R_{f6}$, identiques ou différents les uns des autres, étant indépendamment un atome de fluor, un groupe $C_1$-$C_6$ perfluoro(oxy) alkyle, éventuellement comprenant un ou plusieurs atomes d'oxygène, tel que -$CF_3$, -$C_2F_5$, -$C_3F_7$, -$OCF_3$ ou -$OCF_2CF_2OCF_3$; et

(2) des blocs élastomériques ($A_{TFE}$) à base de tétrafluoroéthylène (TFE) constitués d'une séquence de motifs répétitifs, ladite séquence comprenant des motifs répétitifs issus du TFE et des motifs répétitifs issus d'au moins un monomère fluoré différent du TFE, ledit monomère fluoré étant typiquement choisi dans le

groupe constitué par ceux des classes (b), (c), (d), (e) telles que définies ci-dessus ;

- au moins un bloc thermoplastique (B) constitué d'une séquence de motifs répétitifs issus d'au moins un monomère fluoré.

**5.** Élastomère thermoplastique fluoré selon l'une quelconque des revendications précédentes, le bloc élastomérique (A) comprenant en outre des motifs répétitifs issus d'au moins une bis-oléfine [bis-oléfine (OF)] de formule :

$$R_AR_B=CR_C\text{-}T\text{-}CR_D=R_ER_F$$

$R_A$, $R_B$, $R_C$, $R_D$, $R_E$ et $R_F$, identiques ou différents les uns des autres, étant choisis dans le groupe constitué par H, F, Cl, des groupes $C_1$-$C_5$ alkyle et des groupes $C_1$-$C_5$ (per)fluoroalkyle, et T étant un groupe $C_1$-$C_{18}$ alkylène linéaire ou ramifié ou cycloalkylène, comprenant éventuellement un ou plus d'un atome d'oxygène d'éther, préférablement au moins partiellement fluoré, ou un groupe (per)fluoropolyoxyalkylène.

**6.** Élastomère thermoplastique fluoré selon l'une quelconque des revendications précédentes, le bloc (B) étant constitué d'une séquence de motifs répétitifs, ladite séquence de motifs répétitifs du bloc (B) étant essentiellement constituée de :

(j) de 40 à 60 % en moles de motifs répétitifs issus de l'éthylène (E) ;
(jj) de 60 à 40 % en moles de motifs répétitifs issus du chlorotrifluoroéthylène (CTFE) ; et
(jjj) de 0 à 10 % en moles, préférablement de 0 à 5 %, plus préférablement de 0 à 2,5 % en moles, de motifs répétitifs issus d'au moins un monomère fluoré et/ou monomère hydrogéné différent de E, et de CTFE, les % en moles faisant référence aux moles globales de motifs répétitifs du bloc (B).

**7.** Élastomère thermoplastique fluoré selon l'une quelconque des revendications précédentes, le bloc (B) étant choisi dans le groupe constitué par ceux constitués d'une séquence de motifs répétitifs issus de :

(j) de 45 à 55 % en moles d'éthylène (E) ;
(jj) de 55 à 45 % en moles de chlorotrifluoroéthylène (CTFE), et éventuellement
(jjj) de 0 à 2,5 % en moles d'au moins un (per)fluoroalkylvinyléther répondant à la formule $CF_2$=$CFOR_{fc}$, dans laquelle $R_{fc}$ est un groupe $C_1$-$C_6$ fluoroalkyle ou $C_1$-$C_6$ perfluoroalkyle, par ex. $CF_3$, $C_2F_5$ ou $C_3F_7$, les % en moles faisant référence aux moles globales de motifs répétitifs du bloc (B).

**8.** Élastomère thermoplastique fluoré selon l'une quelconque des revendications précédentes, qui possède une chaleur de cristallisation ($\Delta H_{XX}$) respectant l'inégalité suivante :
$1{,}5\ J/g \leq \Delta H_{XX} \leq F_{(B)} \cdot 35\ J/g$,
préférablement respectant l'inégalité suivante : $2{,}0\ J/g \leq \Delta H_{XX} \leq F_{(B)} \cdot 30\ J/g$,
$\Delta H_{XX}$ étant déterminé selon la norme ASTM D3418, et dans les inégalités mentionnées ci-dessus $F_{(B)}$ étant le rapport en poids $Wt_{(B)}/[Wt_{(A)} + Wt_{(B)}]$, $Wt_{(A)}$ étant le poids du ou des bloc (s) (A) et $Wt_{(B)}$ étant le poids du ou des bloc(s) (B).

**9.** Élastomère thermoplastique fluoré selon l'une quelconque des revendications précédentes, le rapport en poids entre les blocs (A) et les blocs (B) dans l'élastomère thermoplastique fluoré étant typiquement compris entre 95 : 5 et 10 : 90, c'est-à-dire des valeurs de $F_{(B)}$ dans la plage de 0,05 à 0,90.

**10.** Procédé pour la fabrication de l'élastomère thermoplastique fluoré selon l'une quelconque des revendications précédentes, ledit procédé comprenant les étapes séquentielles suivantes :

(a) polymérisation en émulsion d'au moins un monomère fluoré, et possiblement d'au moins une bis-oléfine (OF), dans un milieu aqueux en la présence d'un initiateur de radicaux et d'un agent de transfert de chaînes iodé, fournissant ainsi un prépolymère constitué d'au moins un bloc (A) contenant un ou plusieurs groupes terminaux iodés dispersé dans un milieu aqueux ; et
(b) polymérisation en émulsion d'éthylène (E) et de chlorotrifluoroéthylène (CTFE), et éventuellement d'un ou plus d'un monomère fluoré et/ou monomère hydrogéné différent de E et de CTFE, en la présence d'un initiateur de radicaux et en la présence du prépolymère dispersé dans ledit milieu aqueux tel qu'obtenu de l'étape (a), fournissant ainsi au moins un bloc (B) greffé sur ledit prépolymère par réaction desdits groupes terminaux iodés du bloc (A).

11. Composition (C) comprenant le polymère (F-TPE) selon l'une quelconque des revendications 1 à 10 en combinaison avec au moins un composant supplémentaire, qui est avantageusement choisi dans le groupe constitué par des agents de renforcement, des pigments, des auxiliaires de traitement, des plastifiants, des stabilisants (y compris des stabilisants thermiques, des stabilisants aux UV), des capteurs d'acide, des agents de démoulage, et des systèmes de durcissement.

12. Procédé pour la fabrication d'un article modelé, ledit procédé comprenant le moulage d'un polymère (F-TPE) selon l'une quelconque des revendications 1 à 10 ou d'une composition (C) selon la revendication 11 de sorte à fournir ledit article modelé.

13. Procédé selon la revendication 12, le moulage étant réalisé par au moins l'un parmi un moulage par compression, un moulage par extrusion, un moulage par injection, un moulage par transfert.

14. Procédé selon la revendication 12, ledit procédé comportant une étape d'usinage d'une pièce modelée standard afin d'obtenir l'article modelé ciblé possédant une taille et une forme différentes de ladite pièce modelée standard.

15. Article modelé préparé à partir d'un polymère (F-TPE) selon l'une quelconque des revendications 1 à 10 ou à partir de la composition (C) selon la revendication 11.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5605971 A
- US 5612419 A
- US 6207758 B
- US 2515628 A
- US 2520338 A
- US 5173533 A